(19) Europäisches Patentamt
European Patent Office
Office européen des brevets

(11) **EP 4 107 016 B1**

(12) **EUROPÄISCHE PATENTSCHRIFT**

(45) Veröffentlichungstag und Bekanntmachung des Hinweises auf die Patenterteilung:
**03.12.2025 Patentblatt 2025/49**

(21) Anmeldenummer: **21701512.2**

(22) Anmeldetag: **21.01.2021**

(51) Internationale Patentklassifikation (IPC):
*B60G 17/015* (2006.01)     *B60G 17/019* (2006.01)
*B60W 40/11* (2012.01)     *B60W 40/112* (2012.01)

(52) Gemeinsame Patentklassifikation (CPC):
**B60G 17/019; B60G 17/015; B60W 40/11;
B60W 40/112;** B60G 2400/0511; B60G 2400/0512;
B60G 2400/0531; B60G 2400/0532;
B60G 2400/102; B60G 2400/252; B60G 2600/12

(86) Internationale Anmeldenummer:
**PCT/EP2021/051380**

(87) Internationale Veröffentlichungsnummer:
**WO 2021/164976 (26.08.2021 Gazette 2021/34)**

(54) **ERMITTELN VON DYNAMIKGRÖSSEN EINES FAHRZEUGS MIT VERTEILT ANGEORDNETEN SENSOREN**

DETERMINING OF DYNAMIC VARIABLES OF A VEHICLE USING SENSORS ARRANGED IN A DISTRIBUTED MANNER

DÉTERMINATION DE GRANDEURS DYNAMIQUES D'UN VÉHICULE AU MOYEN DE CAPTEURS AGENCÉS DE MANIÈRE RÉPARTIE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **19.02.2020 DE 102020202154**

(43) Veröffentlichungstag der Anmeldung:
**28.12.2022 Patentblatt 2022/52**

(73) Patentinhaber: **VOLKSWAGEN
AKTIENGESELLSCHAFT
38440 Wolfsburg (DE)**

(72) Erfinder:
• **GREISER, Steffen**
  **38106 Braunschweig (DE)**
• **SCHLEGEL, Jan-Rickmer**
  **38179 Groß Schwülper (DE)**
• **BERKNER, Stefan**
  **38518 Gifhorn (DE)**

(56) Entgegenhaltungen:
DE-A1- 102010 003 205     DE-A1- 4 117 540
DE-B4- 102007 051 204

## EP 4 107 016 B1

**Beschreibung**

Die Erfindung betrifft ein Verfahren zum Ermitteln von Dynamikgrößen eines Fahrzeugs und ein Fahrzeug.

Unter einer Dynamikgröße werden hierin sowohl Größen verstanden, die prinzipiell dynamisch veränderlich sind, sich aber auf einen zeitbezogenen und/oder zumindest temporär statischen Zustand beziehen. Dies gilt z.B. für Größen, die eine aktuelle räumliche Lage oder Position von zumindest Teilen des Fahrzeugs zumindest mittelbar beschreiben (z.B. Winkel). Ebenso fallen hierunter aber Größen, die z.B. Änderungen derartiger zumindest temporärer statischer Größen beschreiben, wie z.B. Raten oder Beschleunigungen. Insbesondere werden unter Dynamikgrößen hierin Wank- und/oder Nickgrößen verstanden.

Es ist bekannt, dass Dynamikgrößen von Fahrzeugen und insbesondere Wank- und/oder Nickgrößen für verschiedene Anwendungen ermittelt werden. Beispielsweise kann mittels derartiger Größen auf einen aktuellen oder sich abzeichnenden räumlichen Zustand des Fahrzeugs geschlossen werden, insbesondere auf die Position und/oder Lage eines Fahrzeugchassis oder auch Fahrzeugaufbaus. Unter einem entsprechenden Aufbau oder Chassis wird dabei in der Fachwelt derjenige Teil des Fahrzeugs verstanden, der von der Fahrzeugaufhängung gegenüber den Fahrzeugrädern abgestützt wird und typischerweise oberhalb von diesen positioniert ist. Die Fahrzeugaufhängung, die typischerweise sogenannte Feder-Dämpfer-Systeme umfasst (insbesondere ein einzelnes Feder-Dämpfer-System je Fahrzeugrad), kann also die Fahrzeugräder und/oder allgemein das Fahrwerk mit dem Fahrzeugaufbau verbinden. Dieser kann die Fahrzeugkarosserie, den Motorraum und/oder den Innenraum umfassen.

Beispielhafte Anwendungsfelder für ermittelte Dynamikgrößen sind eine sogenannte Umkipp- oder auch Rollover-Erkennung oder aber die allgemeine Steuerung/Regelung von Fahrdynamikfunktionen, wie beispielsweise ein ESP-System. Auch erfindungsgemäß kann vorgesehen sein, dass die ermittelten Dynamikgrößen für diese, aber auch für jegliche anderen gängigen Zwecke verwendet werden.

Auch sind Lösungen bekannt, bei denen Fahrzeugdynamiken mittels Aktoren gezielt beeinflusst werden können. Hierfür können z.B. Feder-Dämpfer-Systeme mit Aktoren versehen sein, um das Feder- und/oder Dämpfungsverhalten des Fahrzeugs und insbesondere des Aufbaus gegenüber den Fahrzeugrädern definiert einzustellen. In an sich bekannter Weise kann hierdurch z.B. eine den Fahrkomfort erhöhende oder aber die Sportlichkeit erhöhende Einstellung des Fahrwerks vorgenommen werden. Auch in diesem Zusammenhang ist es vorteilhaft, relevante Dynamikgrößen z.B. zwecks Nachregelung der gewählten Fahrwerkseinstellung zu erfassen.

Es existieren Lösungen, bei denen Zustandsgrößen des Fahrzeugs sensorisch erfasst werden und einem (z.B. virtuellen, rechnerbasierten und/oder mathematischen) Fahrzeugmodell zugeführt werden. Das Fahrzeugmodell, das z.B. von einem Steuergerät des Fahrzeugs ausgeführt wird und/oder von einem von dem Steuergerät ausgeführten Softwaremodul umfasst ist, kann den Zusammenhang zwischen erhaltenen Sensormesswerten und vorliegenden Dynamikgrößen abbilden, sodass die Dynamikgrößen ohne eine direkte Messung anhand des Modells ermittelt und insbesondere berechnet werden können. Ein Beispiel ist das sogenannte Einspurmodell. Nachteilig in diesem Zusammenhang ist, dass das Fahrzeugmodell individuell auf jeden Fahrzeugtyp und insbesondere auch jede Fahrzeugvariante (z.B. Antriebs- und/oder Ausstattungsvariante) angepasst werden muss. Beispielsweise kann es erforderlich sein, eine typen- bzw. variantenabhängige Masseverteilung des Fahrzeugs stets möglichst präzise im Fahrzeugmodell zu beschreiben. Dies erhöht den Aufwand während der Fahrzeugentwicklung und insbesondere auch bei nachträglichen Fahrzeugänderungen. Weitere beispielhaft zu hinterlegende und/oder zu ermittelnde Eigenschaften zur Modelldefinition sind Eigenfrequenzen der betrachteten Fahrzeugdynamiken, wie beispielsweise eine Gier-, Nick- oder Wankeigenfrequenz.

Prinzipiell ist es auch möglich, sämtliche Dynamikgrößen sensorisch zu erfassen, z.B. mittels sogenannter 5-D- oder auch 6-D-Sensoren, die insbesondere die Aufbaubewegungen hinsichtlich sämtlicher sechs räumlicher Freiheitsgrade sensorisch erfassen. Eine solche Sensorik zeichnet sich jedoch durch einen hohen Kostenaufwand aus, insbesondere da brauchbare Sensoriken nicht ohne weiteres verfügbar sind.

Im Stand der Technik sind Lösungen bekannt, bei denen zumindest beispielhaft Dynamikgrößen und insbesondere eine Wankbeschleunigung anhand nur ausgewählter Sensormesswerte und insbesondere eindimensionaler Sensormesswerte bestimmbar sind. Beispielhaft wird in der DE 103 61 281 A1 das Ermitteln der Wankbeschleunigung aus der Vertikalbeschleunigung des Fahrzeugaufbaus gelehrt, wobei die Vertikalbeschleunigung mittels zweier unterschiedlich im Fahrzeug positionierter Sensoren gemessen wird. In diesem Fall ist zwar kein exakt abgestimmtes Fahrzeugmodell zwingend erforderlich und kann auch auf eine vergleichsweise günstige lediglich entlang der Vertikalachse messende Sensorik zurückgegriffen werden. Allerdings setzt diese Lösung eine exakte Positionierung der Sensoren an vorbestimmten Einbauorten voraus, z.B. eine exakte Positionierung der Sensoren auf gleicher Höhe (d.h. an einer selben Position entlang einer Vertikalachse). Andernfalls sind die in diesem Dokument gelehrten Gleichungen nicht anwendbar. Das Erfordernis, entsprechende Einbaupositionen exakt einzuhalten, mindert jedoch die Flexibilität bei der Fahrzeugentwicklung. Es handelt sich folglich um eine den Entwicklungsaufwand nachteilig beeinflussende zusätzliche Randbedingung.

Die DE 10 2004 024 951 offenbart das Bestimmen der Aufbau-Geschwindigkeit eines Fahrzeugs ohne Aufbau-Beschleunigungssensoren auf Basis von Signalen von Höhenstandssensoren sowie Radvertikalbeschleunigungssensoren.

Die DE 10 2006 001 436 A1 offenbart das Bestimmen einer Vertikalgeschwindigkeit eines Fahrzeugaufbaus mittels eine Radvertikalbeschleunigung messenden Beschleunigungssensoren sowie eine Einfederungsgeschwindigkeit messenden Weg- oder Winkelsensoren.

Aus der DE 41 17 540 A1 ist eine Einrichtung zur Bestimmung von Nick- und Rollwinkel sowie der Höhe über der Fahrbahn bei Kraftfahrzeugen bekannt, wobei am Fahrzeugboden mindestens die Ultraschallsensoren derart angeordnet sind, dass diese zwischen sich eine Ebene aufspannen.

Aus der DE 10 2010 003 205 A1 ist ein Verfahren zur Bestimmung der vertikalen Beschleunigung, der longitudinalen Winkelbeschleunigung und der transversalen Winkelbeschleunigung eines Körpers bekannt. Dabei umfasst der Körper eine longitudinale Drehachse, eine transversale Drehachse, mindestens drei Federelemente, mindestens drei Stossdämpfer und mindestens drei Höhensensoren, wobei jeweils ein Höhensensor im Bereich eines Stossdämpfers angeordnet ist. Das Verfahren ist dadurch gekennzeichnet, dass die Dämpfungskräfte der Stossdämpfer, die Federkräfte der Federelemente, der Schwerpunkt des Köpers, die Masse des Körpers, die Trägheitsmomente des Körpers, die Positionen der Stossdämpfer in Bezug auf den Schwerpunkt des Körpers, die mittlere Höhe der longitudinalen Drehachse und die mittlere Höhe der transversalen Drehachse bestimmt werden und die vertikale Beschleunigung, die longitudinale Winkelbeschleunigung und die transversale Winkelbeschleunigung mit Hilfe der Masse des Körpers, der Trägheitsmomente des Körpers, der Positionen der Stossdämpfer in Bezug auf den Schwerpunkt des Körpers, der mittleren Höhe der longitudinalen Drehachse, der mittleren Höhe der transversalen Drehachse, der Dämpfungskräfte der Stossdämpfer und der Federkräfte der Federelemente bestimmt werden. Die DE 10 2007 051 204 B4 beschreibt ein Verfahren zur Bestimmung der Bewegung des Aufbaus eines Fahrzeugs in mindestens einem beliebigen Punkt aus den Bewegungen an mindestens drei Sensorpositionen des Aufbaus, wobei die drei Sensorpositionen eine durch eine Ebenengleichung bestimmbare Ebene aufspannen, in der auch der mindestens eine beliebige Punkt liegt, die Bewegungen in den mindestens drei Sensorpositionen mit vertikalen Messgrößen als Bewegungsgrößen in z-Achsenrichtung vorliegen und unter Kenntnis der Sensorpositionen in x- und y-Koordinatenrichtung und der Position des mindestens einen beliebigen Punktes in x- und y-Koordinaten, und nach Ersetzen der z-Koordinate durch die an dieser Stelle liegenden Bewegung entlang der z-Achse, die Bewegung in vertikaler z-Richtung an der Position des mindestens einen beliebigen Punktes in der Ebene über die Ebenengleichung bestimmt wird.

Eine Aufgabe der Erfindung ist es daher, das Ermitteln von Dynamikgrößen eines Fahrzeugs und insbesondere von Wank- und/oder Nickgrößen zu verbessern und insbesondere zu vereinfachen.

Diese Aufgabe wird durch die Gegenstände mit den Merkmalen der beigefügten unabhängigen Ansprüche gelöst. Eine vorteilhaft Weiterbildung ist im abhängigen Anspruch definiert.

Es versteht sich, dass sämtliche der vorstehend beschriebenen Merkmale und Erläuterungen auch bei der vorliegenden Lösung vorgesehen sein bzw. auf diese zutreffen können, sofern nicht anders angegeben oder ersichtlich.

Vorliegend wurde erkannt, dass Dynamikgrößen von Interesse auch mittels weniger aufwendiger Sensoren präzise erfassbar sind, insbesondere mittels lediglich eindimensional messender Sensoren (z.B. entlang einer vertikalen Achse, die entlang einer Richtung der Gravitationskraft ausgerichtet ist). Insbesondere wurde erkannt, dass eine ausreichende Präzision dann erzielbar ist, wenn die Einbauorte der Sensoren möglichst umfassend berücksichtigt werden. Gleichzeitig wurde erkannt, dass dies wiederum ermöglicht, die Einbausensoren flexibler innerhalb eines Fahrzeugs zu positionieren. In Abkehr von dem vorstehend diskutierten Stand der Technik (DE 103 61 281 A1) kann dann z.B. auf das Erfordernis verzichtet werden, Sensoren auf identischer Höhe anzuordnen, und kann somit die Einbauflexibilität (d.h. die Flexibilität hinsichtlich der Wahl der Einbauorte) erhöht werden.

Es wird erfindungsgemäß ein Verfahren zum Ermitteln von Dynamikgrößen eines Fahrzeugs, insbesondere eines Kraftfahrzeugs und ferner insbesondere eines Personenkraftwagens oder Lastkraftwagens, vorgeschlagen, wobei eine Mehrzahl von Sensoren an unterschiedlichen Einbauorten im Fahrzeug bereitgestellt ist, die jeweils einen Wert wenigstens einer (z.B. am Einbauort) lokalen Dynamikgröße des Fahrzeugs ermitteln, die (d.h. wobei die Dynamikgröße) in Bezug auf eine vorbestimmte (insbesondere virtuelle) Fahrzeugachse definiert ist, wobei das Verfahren aufweist:

- Ermitteln eines Werts einer globalen Dynamikgröße des Fahrzeugs, die in Bezug auf eine Wank- oder Nickachse des Fahrzeugs definiert ist, anhand der Werte der lokalen Dynamikgröße sowie unter Berücksichtigung wenigstens zweier Koordinatenwerte eines jeden Einbauorts.

Bei der Dynamikgröße handelt es sich erfindungsgemäß um eine Wank- oder Nickgröße.

Erfindungsgemäß handelt es sich um einen Nickwinkel oder Wankwinkel. Diese Bewegungen beziehen sich auf die erwähnte Wankachse bzw. Nickachse des Fahrzeugs. In an sich bekannter Weise kann unter einer Wankachse eine in Längsrichtung des Fahrzeugs verlaufende Achse und insbesondere eine Längsachse des Fahrzeugs verstanden werden, die z.B. ein Heck und eine Front des Fahrzeugs verbindet. Es kann sich also um eine (zumindest bei Stillstand auf einer Ebene) Horizontalachse handeln. Die Nickachse kann orthogonal zur Wankachse verlaufen und auch zu einer Vertikalachse des Fahrzeugs, die alternativ auch als Höhenachse bezeichnet werden kann. Diese Höhenachse kann insbesondere bei Stillstand auf einer Ebene einer vertikalen Raumrichtung entsprechen. Die Nickachse kann eine horizontal verlaufende Achse sein.

Die Einbauorte beschreiben allgemein Positionen der Sensoren im Fahrzeug. Sie können durch räumliche Koordinaten beschrieben werden. Die Einbauorte bzw. die Koordinaten können in einem vorbestimmten Koordinatensystem definiert sein, in dem auch die hierin erwähnten Fahrzeugachsen definiert sein können, insbesondere in einem ortsfesten (Raum-) Koordinatensystem. Lediglich beispielhaft können im Folgenden die Dynamikgrößen in einem entsprechenden ortsfesten Koordinatensystem definiert sein, das ein kartesisches Koordinatensystem ist. Dabei verläuft eine als Z-Achse definierte Achse in vertikaler Raumrichtung, wohingegen die X-Achse und die Y-Achse in einer horizontalen Ebene verlaufen. Die X-Achse ist dabei (zumindest in einem Ruhezustand des Fahrzeugs) parallel zur Wankachse angeordnet und die Y-Achse parallel zur Nickachse. Die Einbauorte der Sensoren können beispielhaft jeweils durch eine X-, Y- und Z-Koordinatenwert beschrieben werden.

Die Sensoren können jeweils an ein am Feder-Dämpfer-System angeordnet und/oder in ein solches integriert sein. Sie können gemäß üblicher Bauformen ausgebildet sein, um einen Höhenstand und/oder Vertikalbeschleunigungen zu messen, insbesondere eines mit einem entsprechenden Feder-Dämpfer-System gekoppelten Aufbaus des Fahrzeugs.

Erfindungsgemäß kann eine Kalibrierung vorgesehen sein, um die Sensormesswerte Werten der lokalen Dynamikgrößen eindeutig zuordnen zu können bzw. die entsprechenden Werte der Dynamikgrößen anhand der Sensormesswerte präzise zu ermitteln.

Es ist vorgesehen, dass mehr als drei Sensoren vorgesehen sind. Diese können an unterschiedlichen Fahrzeugrädern und/oder an unterschiedlichen Feder-Dämpfer-Systemen angeordnet sein.

Es kann vorgesehen sein, dass die Sensoren jeweils eine gleichartige Dynamikgröße ermitteln oder, anders ausgedrückt, dass jeder Sensor einen lokalen Wert einer gemeinsamen Dynamikgröße bestimmt. Die lokale Dynamikgröße und die globale Dynamikgröße können auch verschieden voneinander sein.

Wie nachstehend noch erläutert, kann beispielhaft vorgesehen sein, dass die Sensoren als lokale Dynamikgröße jeweils einen lokalen Höhenstand ermitteln, wobei sich die entsprechenden (lokalen) Werte dieser gemeinsamen Dynamikgröße (Höhenstand) jedoch aufgrund z.B. unterschiedlicher vertikaler Auslenkungen der Fahrzeugräder oder auch Schwingungen des Fahrzeugaufbaus voneinander unterscheiden können. Insbesondere kann also vorgesehen sein, dass die vorbestimmte Fahrzeugachse eine Höhenachse des Fahrzeugs ist. Allgemein kann es sich, analog zur Wank- oder Nickachse bei dieser Höhenachse, um eine virtuelle Achse handeln. Hiervon zu unterscheiden ist die hierin ebenfalls erwähnte Fahrzeugradachse, die in an sich bekannter Weise zumindest indirekt über tatsächliche mechanische Fahrzeugkomponenten festgelegt und/oder mit solchen Fahrzeugkomponenten gleichgesetzt werden kann. Allgemein kann aber vorgesehen sein, dass die Fahrzeugachse der lokalen Dynamikgröße verschiedenartig von der Achse ist, in Bezug auf der die globale Dynamikgröße definiert ist.

Zusammengefasst kann also vorgesehen sein, dass sich die lokale und globale Dynamikgröße voneinander unterscheiden bzw. nicht gleichartig sind und/oder dass diese Dynamikgrößen in Bezug auf unterschiedliche Achsen definiert sind. Aus den Werten der lokalen Dynamikgrößen (z.B. der Höhenstand) kann dann die globale Dynamikgröße (z.B. ein Nick- oder Wankwinkel) berechnet werden.

Dadurch, dass die globale Dynamikgröße auf Basis mehrerer Koordinatenwerte des Einbauorts und vorzugsweise sämtlicher Koordinatenwerte (d.h. z.B. der X-, Y- und Z-Koordinaten ermittelt wird), können die Sensoren flexibler positioniert sein. Insbesondere kann dann auf Anforderungen verzichtet werden, die das Berücksichtigen einer geringeren Anzahl von Koordinatenwerten erst ermöglichen, z.B. das Anordnen auf einer selben Höhe im Fahrzeug oder aber entlang einer gemeinsamen (insbesondere Quer-)Achse des Fahrzeugs.

Bildlich gesprochen können also die Sensoren in Bezug auf einzelne Feder-Dämpfer-Systeme oder auch relativ zu einzelnen Fahrzeugrädern innerhalb eines gemeinsamen Fahrzeugs auch deutlich abweichend voneinander positioniert sein und kann dies aber durch das Berücksichtigen einer Mehrzahl von Koordinatenwerten rechnerisch kompensiert werden. Somit wird das Ermitteln von Dynamikgrößen ohne zwingende exakte Fahrzeugmodellierung bzw. Dynamikgrößenermittlung anhand eines geschilderten Fahrzeugmodells ermöglicht, sondern durch Verwenden einer im Vergleich zu 5-D- oder 6-D-Sensoren günstigeren Sensorik, deren Einbauflexibilität zusätzlich kosten- und aufwandssparend erhöht wird.

Allgemein ist darauf hinzuweisen, dass die Sensoren auch auf das Ermitteln der entsprechenden lokalen Dynamikgröße oder aber auch nicht mehr als zwei oder drei Dynamikgrößen je Einbauort beschränkt sein können, beispielsweise auf einen Höhenstand und/oder eine Aufbaubeschleunigung. Auf diese Weise wird die Komplexität und werden die Kosten der Sensoren reduziert.

Es ist vorgesehen, dass die Einbauorte nicht in einer gemeinsamen (virtuellen) Ebene liegen. Jeweils ein Sensor kann dabei einem Fahrzeugrad oder auch einem dortigen Feder-Dämpfer-System zugeordnet sein, sodass beispielsweise an drei unterschiedlichen Fahrzeugrädern entsprechende Sensoren verbaut sind. Dann kann aber beispielsweise vorgesehen sein, dass die Höhenpositionen der Sensoren voneinander abweichen, z.B. an den Vorderrädern höher oder niedriger sind als an den Hinterrädern. Dies wird durch die erfindungsgemäß vorgesehene umfassendere Berücksichtigung des genauen Einbauorts (d.h. der Dynamikgrößenermittlung auf Basis von wenigstens zweier Einbauort-Koordinatenwerten) ermöglicht und erhöht die Einbauflexibilität entsprechend.

Zusätzlich kann vorgesehen sein, dass zwei der Sensoren einer gemeinsamen Fahrzeugradachse zugeordnet sind und sich die Einbauorte dieser Sensoren hinsichtlich des Betrags wenigstens eines Einbauort-Koordinatenwerts voneinander unterscheiden. Die Fahrzeugradachse kann eine Vorderachse oder eine Hinterachse sein. Sie kann allgemein zwei Fahrzeugräder umfassen bzw. verbinden, die an unterschiedlichen Seiten des Fahrzeugs angeordnet sind, z.B. an einer linken und an einer rechten Seite. Beispielsweise kann sie also ein linkes und rechtes Vorderrad oder aber ein linkes und rechtes Hinterrad miteinander verbinden. Die beiden Sensoren können in der Weise einer entsprechenden Fahrzeugradachse zugeordnet sein, dass sie an den von dieser Fahrzeugradachse verbundenen Rädern positioniert sind, z.B. einer an einem linken und der andere an einem rechten Rad. Gemäß dieser Ausführungsform kann dann aber vorgesehen sein, dass die Sensoren unterschiedlich relativ zu den jeweiligen Fahrzeugrädern positioniert sind, also beispielsweise in einem unterschiedlichen (horizontalen) Abstand hierzu oder aber in einer unterschiedlichen Höhe.

Auch in diesem Fall wird also die Einbauflexibilität aufgrund der unterschiedlichen Positionierbarkeit der Sensoren erhöht, obwohl diese einer gemeinsamen Fahrzeugradachse zugeordnet sind. Möglich gemacht wird dies durch die vorstehend geschilderte genauere Berücksichtigung des exakten Einbauorts der Sensoren bei der Dynamikgrößenermittlung.

Erfindungsgemäß ist die globale Dynamikgröße ein Nickwinkel oder ein Wankwinkel. In diesem Zusammenhang kann vorgesehen sein, dass die lokale Dynamikgröße einen Höhenstand von zumindest einem Teil des Fahrzeugs (insbesondere des Fahrzeugaufbaus oder aber Fahrzeugchassis) entlang einer Vertikalachse (hierin auch als Höhenachse bezeichnet) des Fahrzeugs ist. Anders ausgedrückt sieht diese Ausführungsform vor, den Nickwinkel und/oder Wankwinkel anhand lokaler Höhenstände zu ermitteln. Wenn die Sensoren, wie erfindungsgemäß bevorzugt, jeweils einem einzelnen Fahrzeugrad und/oder dortigem Feder-Dämpfer-System zugeordnet sind, können also die Höhenstände einzelner Systeme bzw. Fahrzeugräder miteinander verglichen werden. Insbesondere können, wie im Rahmen des Ausführungsbeispiels noch näher erläutert, Höhenstände von Dompunkten des Fahrzeugaufbaus ermittelt werden, d.h. ein Höhenstand je Dompunkt. Entsprechend können lokale Dompunkt-Höhenstände als lokale Dynamikgrößen ermittelt werden.

Vorteilhaft ist diese Ausführungsform dahingehend, als dass der Höhenstand aufwandsarm erfassbar ist, insbesondere aufwandsarmer, als wenn man versuchen würde, mit einer 5D- oder 6D-Sensorik den Nickwinkel oder Wankwinkel direkt zu bestimmen oder aber diese Winkel mittels eines Fahrzeugmodells zu berechnen.

Erfindungsgemäß ist in diesem Zusammenhang ferner vorgesehen, auf Basis von Werten der lokalen Dynamikgröße eine virtuelle Ebene zu ermitteln, hier eine Regressionsebene. In an sich bekannter Weise können Ebenen anhand von drei Punkten definiert werden. Erfindungsgemäß ist vorgesehen, die lokalen Werte des Höhenstands als entsprechende Punkte für eine virtuelle Ebenendefinition zu verwenden. Es ist vorgesehen, dass eine Regressionsebene definiert wird, die nicht zwingend durch die entsprechenden Punkte bzw. Orte verläuft. Stattdessen kann dies einer Ebene entsprechen, die sich zwischen den Punkten in der Weise erstreckt, dass diese zumindest teilweise oberhalb oder unterhalb der Regressionsebene angeordnet sind. Die Regressionsebene ist derart definiert, dass eine Abstandsgröße zu den entsprechenden Punkten (insbesondere ein absoluter oder durchschnittlicher Abstand hierzu) minimiert wird.

Es hat sich gezeigt, dass hiermit präzisere Ergebnisse erzielbar sind, als wenn die einzelne Höhenstände direkt einer Größenermittlung zugrunde gelegt werden.

Die Definition einer entsprechenden Ebene kann erfordern (bzw. kann dadurch ermöglicht werden), dass, wie erfindungsgemäß allgemein vorgesehen, die Einbauorte umfassend und z.B. vorzugsweise hinsichtlich sämtlicher ihrer Koordinatenwerte berücksichtigt werden, zuzüglich des ermittelten lokalen Höhenstands.

Insbesondere kann die virtuelle Ebene verwendet werden, um anhand ihrer räumlichen Lage die globale Dynamikgröße zu bestimmen. Insbesondere kann die Lage in Bezug auf die Wank- oder Nickachse bestimmt werden, um die Wank- und Nickwinkel zu ermitteln.

Es kann bei den mehr als drei Sensoren vorgesehen sein, und insbesondere wenn diese unterschiedlichen Fahrzeugrädern oder (radspezifischen) Feder-Dämpfer-Systemen zugeordnet sind, dass die virtuelle Ebene wie folgt definiert ist:

$$f(x, y) = f_0 + f_x x + f_y y \tag{1}$$

Dabei ist x und y eine Position (in der Ebene), an der beispielsweise eine globale Dynamikgröße von Interesse beziffert werden soll. Die $f_i$-Werte sind Konstanten, die anhand der ermittelten Werte der lokalen Dynamikgröße bestimmt werden sollen (also anhand der Sensormesswerte).

Wenn die virtuelle Ebene eine Regressionsebene ist, die in der oben erläuterten Weise eine Art Ausgleichsebene und/oder eine ein gewünschtes Abstandskriterium erfüllende Ebene ist, können die fi-Werte von einem Vektor b = [$f_o$, $f_x$, $f_y$] umfasst sein.

Dieser Vektor kann mittels nachstehender Gleichung (5) ermittelt werden, die wie folgt herleitbar ist: Gegeben sind die Sensormesswerte (also der lokale Höhenstand) si =[ $s_1$, $s_2$, $s_3$] der einzelnen Sensoren 1-3. Diese Werte können den Höhenstand direkt am Einbauort oder an einem Bezugspunkt angeben, der in definierter Weise relativ zu dem Einbauort positioniert ist. Der Bezugspunkt kann insbesondere ein Dompunkt sein, dessen (Höhen-) Abstand zum Einbauort bekannt ist.

Die Einbauort-Koordinaten [x, y, z] der mit 1-3 referenzierten Sensoren sind hinsichtlich der x- und y-Koordinatenwerte bekannt (der z-Wert variiert mit dem gemessenen Höhenstand).

Beispielhaft kann als Abstandskriterium ein minimaler kumulierter oder durchschnittlicher Abstand der Ebene zu den Sensormesswerten $s_i$ =[ $s_1$, $s_2$, $s_3$] vorgegeben sein. Die Differenz der (lokalen) Höhenstandswerten der Ebene, also von in die Ebene transformierten Höhenstandswerten, zu den Sensormesswerten soll also minimiert werden, was sich in der folgenden Gleichung 2 widerspiegelt:

$$min\left(\left\|\begin{pmatrix}s_1\\s_2\\s_3\end{pmatrix} - \begin{bmatrix}1 & x_1 & y_1\\1 & x_2 & y_2\\1 & x_3 & y_3\end{bmatrix}\begin{pmatrix}f_0\\f_x\\f_y\end{pmatrix}\right\|\right) \quad (2)$$

Formuliert man diese Minimierungsaufgabe als ein quadratisches Optimierungsproblem und leitet dieses nach den $f_i$-Konstanten ab, ergibt sich als Ansatz der folgende Ausdruck von Gleichung 3:

$$\begin{pmatrix}s_1\\s_2\\s_3\end{pmatrix} - \begin{bmatrix}1 & x_1 & y_1\\1 & x_2 & y_2\\1 & x_3 & y_3\end{bmatrix}\begin{pmatrix}f_0\\f_x\\f_y\end{pmatrix} = y - A \cdot b \quad (3)$$

Dabei ist der quadratische Fehler:

$$(y - A \cdot b)^T (y - A \cdot b) = 0 \quad (3a)$$

Um den minimalen Fehler zu finden, wird der obige Ausdruck abgeleitet. Die Ableitung nach dem Vektor b lautet:

$$(y - A \cdot b)^T (-b) = 0 \quad (3b)$$

Wird die Gleichung 3b nach b umgestellt, dann erhält man die Lösung des Optimierungsproblems (also die Werte des Vektorkomponenten von b, bei denen das Abstandskriterium erfüllt ist):

$$b = (A^T \cdot A)^{-1} \cdot A^T y \quad (4)$$

Ausformuliert und beispielhaft für drei Sensoren, von denen zwei an den Vorderrädern und einer an den Hinterrädern ist sind, gilt dabei für die Größe $b_2$ (also $f_x$):

$$f_x = b_2 = k_1 s_1 + k_2 s_2 + k_3 s_3 + k_4 \quad (5).$$

Genauer gesagt sind in diesem Beispiel die Einbauorte der Sensoren "vorne links" ($v_l$), "vorne rechts" ($v_r$) und "hinten links" ($h_l$), wobei bezüglich der einzelnen x,y,z-Koordinaten dieser Einbauorte im Folgenden auf die entsprechenden Indizes zurückgegriffen wird.

Weiter handelt es sich bei den $k_i$-Variablen in obiger Gleichung (5) um folgende Hilfsgrößen:

$$k_1 = \frac{y_{hl} - y_{vr}}{x_{hl}y_{vl} - x_{vl}y_{hl} - x_{hl}y_{vr} + x_{vr}y_{hl} + x_{vl}y_{vr} - x_{vr}y_{vl}}$$

$$k_2 = \frac{-(y_{hl} - y_{vl})}{x_{hl}y_{vl} - x_{vl}y_{hl} - x_{hl}y_{vr} + x_{vr}y_{hl} + x_{vl}y_{vr} - x_{vr}y_{vl}}$$

$$k_3 = \frac{-(y_{vl} - y_{vr})}{x_{hl}y_{vl} - x_{vl}y_{hl} - x_{hl}y_{vr} + x_{vr}y_{hl} + x_{vl}y_{vr} - x_{vr}y_{vl}}$$

$$k_4 = \frac{-(y_{hl}z_{vl} - y_{vl}z_{hl} - y_{hl}z_{vr} + y_{vr}z_{hl} + y_{vl}z_{vr} - y_{vr}z_{vl})}{x_{hl}y_{vl} - x_{vl}y_{hl} - x_{hl}y_{vr} + x_{vr}y_{hl} + x_{vl}y_{vr} - x_{vr}y_{vl}}$$

Ausformuliert gilt ferner für die Größe $b_3$ (also $f_y$):

$$f_y = b_3 = k_1 s_1 + k_2 s_2 + k_3 s_3 + k_4 \quad (6).$$

Dabei handelt es sich bei den $k_i$-Variablen um folgende Hilfsgrößen:

$$k_1 = \frac{x_{hl} - x_{vr}}{x_{hl}y_{vl} - x_{vl}y_{hl} - x_{hl}y_{vr} + x_{vr}y_{hl} + x_{vl}y_{vr} - x_{vr}y_{vl}}$$

$$k_2 = \frac{-(x_{hl} - x_{vl})}{x_{hl}y_{vl} - x_{vl}y_{hl} - x_{hl}y_{vr} + x_{vr}y_{hl} + x_{vl}y_{vr} - x_{vr}y_{vl}}$$

$$k_3 = \frac{-(x_{vl} - x_{vr})}{x_{hl}y_{vl} - x_{vl}y_{hl} - x_{hl}y_{vr} + x_{vr}y_{hl} + x_{vl}y_{vr} - x_{vr}y_{vl}}$$

$$k_4 = \frac{x_{hl}z_{vl} - x_{vl}z_{hl} - x_{hl}z_{vr} + x_{vr}z_{hl} + x_{vl}z_{vr} - x_{vr}z_{vl}}{x_{hl}y_{vl} - x_{vl}y_{hl} - x_{hl}y_{vr} + x_{vr}y_{hl} + x_{vl}y_{vr} - x_{vr}y_{vl}}$$

Die Dynamikgrößen, hier beispielhaft ausgedrückt als Eulerwinkel, die eine Fahrzeugorientierung im Raum beschreiben, ergeben sich wie folgt, wobei $\theta_b$ der Nickwinkel, der $\Phi_b$ Wankwinkel und $z_b$ ein Höhenwert ist:

$$\phi_b = \operatorname{atan}(f_y)$$
$$\theta_b = -\operatorname{atan}(f_x)$$
$$z_b = f(x_{CG}, y_{CG}) \quad (7).$$

Die Vorzeichen in (7) sind lediglich beispielhaft gewählt und einer Wahl der Ausrichtung bestimmter Koordinatensysteme geschuldet. Vorliegend werden beispielsweise die Werte der Höhenstandsensoren als Abstand zum Boden definiert, was sich auf eine Definition des Nickwinkels $\theta_b$ und dass damit zusammenhängende Vorzeichen auswirkt.

Die Variable $z_y$ beschreibt die Höhe des Fahrzeugschwerpunktes gegenüber der Fahrbahn. Diese wird gebildet, indem die die Ebenengleichung $f = f_0 + f_x x f_y y$ für den Schwerpunkt mit seinen Koordinaten $x_{CG}$ und $y_{CG}$ berechnet wird.

Eine nicht beanspruchte Variante sieht vor, dass die globale Dynamikgröße eine Nickbeschleunigung oder eine Wankbeschleunigung ist. Die lokale Dynamikgröße ist dann vorzugsweise eine Vertikalbeschleunigung (Aufbaubeschleunigung) von zumindest einem Teil des Fahrzeugs (z.B. einem Aufbau und/oder einem Chassis) entlang einer Vertikalachse des Fahrzeugs. Anders ausgedrückt kann also anhand sensorisch gemessener Vertikalbeschleunigungen und, genauer gesagt, lokaler Werte dieser Vertikalbeschleunigung (insbesondere an den Einbauorten und/oder an den Sensoren jeweils zugeordneten Dompunkten des Fahrzeugs) eine lokale Vertikalbeschleunigung gemessen werden, um daraus die globale Dynamikgröße zu bestimmen. Auch in diesem Zusammenhang ist die erfindungsgemäße Lösung dahingehend vorteilhaft, als dass durch umfassendes Berücksichtigen von Details zum Einbauort beim Bestimmen der globalen Dynamikgröße die Einbauorte flexibel festgelegt werden können.

Insbesondere kann in diesem Zusammenhang vorgesehen sein, dass die globale Dynamikgröße eine Nickbeschleunigung ist, zwei der Sensoren einer gemeinsamen Fahrzeugradachse zugeordnet sind und die Nickbeschleunigung auf Basis einer Differenz der Werte der lokalen Dynamikgrößen dieser Sensoren ermittelt wird. Beispielsweise können die Sensoren jeweils einem Vorderrad oder einem Hinterrad zugeordnet sein, sodass z.B. am linken Vorderrad und am rechten Vorderrad (oder an den entsprechenden Hinterrädern) gemessene Werte zum Ermitteln der Nickbeschleunigung verwendet werden.

Ebenso kann in der nicht beanspruchten Variante vorgesehen sein, dass die globale Dynamikgröße eine Wankbeschleunigung ist, zwei der Sensoren unterschiedlichen Fahrzeugradachsen zugeordnet sind (also beispielsweise einer an einem Vorderrad und der andere an einem Hinterrad) und die Wankbeschleunigung auf Basis einer Differenz der Werte der lokalen Dynamikgröße dieser Sensoren ermittelt wird.

Im Detail kann zur Ermittlung der Nick- und Wankbeschleunigung auf Basis der genannten Differenzen angesetzt werden, dass eine Abhängigkeit der lokalen Werte der lokalen Dynamikgröße besteht. Insbesondere kann (zum Beispiel bei Annahme einer ausreichenden Verwindungssteifheit) davon ausgegangen werden, dass die Vertikalbeschleunigungen auch an unterschiedlichen Fahrzeugradachsen voneinander abhängig sind bzw. ineinander umgerechnet werden können. Beispielsweise kann die Vertikalbeschleunigung vorne links ($a_{z,vl}$) aber auch hinten links ($a_{z,hl}$) jeweils anhand der Vertikalbeschleunigung vorne rechts ermittelt werden ($a_{z,vr}$), wobei sich die Positionen auf einzelne Fahrzeugräder (bzw. dort angeordnete Sensoren) an einer entsprechenden Vorder-und Hinterachse beziehen. Die Vertikalbeschleunigung vorne rechts ($a_{z,vr}$) wird hier beispielhaft als Rechengröße herangezogen, um die nachstehende Gleichung (9) aufzustellen:

$$a_{z,vl} = a_{z,vr} + (x_{vl} - x_{vr})\,(pr - \dot{q}) + (y_{vl} - y_{vr})(qr + \dot{p}) - (z_{vl} - z_{vr})(p^2 + q^2)$$
$$a_{z,hl} = a_{z,vr} + (x_{hl} - x_{vr})\,(pr - \dot{q}) + (y_{hl} - y_{vr})(qr + \dot{p}) - (z_{hl} - z_{vr})(p^2 + q^2)$$

$$(8).$$

Die Wank- und Nickgrößen sind dabei in Bezug auf ein körperfestes Koordinatensystem angegeben, mit p als Wankrate, q als Nickrate, r als Gierrate und den entsprechenden abgeleiteten Größen als Wankbeschleunigung, Nickbeschleunigung und Gierbeschleunigung. Umgestellt ergibt Gleichung (8) folgendes, wobei der zweite vollständig in Klammern gesetzte Summand aufgrund der dortigen Multiplikationen/Potenzierungen zweier verschiedener oder gleichartiger Dynamikgrößen vernachlässigbar klein ist:

$$\begin{pmatrix} \dot{p} \\ \dot{q} \end{pmatrix} = \begin{bmatrix} -(y_{vl} - y_{vr}) & (x_{vl} - x_{vr}) \\ -(y_{hl} - y_{vr}) & (x_{hl} - x_{vr}) \end{bmatrix}^{-1} \cdot \left( \begin{pmatrix} a_{z,vr} - a_{z,vl} \\ a_{z,hl} - a_{z,vl} \end{pmatrix} + \begin{pmatrix} (x_{vl} - x_{vr})pr + (y_{vl} - y_{vr})qr - (z_{vl} - z_{vr})(p^2 + q^2) \\ (x_{hl} - x_{vr})pr + (y_{hl} - y_{vr})qr - (z_{hl} - z_{vr})(p^2 + q^2) \end{pmatrix} \right)$$

$$(9)$$

Im Ergebnis ergibt sich zur Bestimmung von Wank- und Nickbeschleunigung Folgendes

$$\begin{pmatrix} \dot{p} \\ \dot{q} \end{pmatrix} = \begin{bmatrix} -(y_{vl} - y_{vr}) & (x_{vl} - x_{vr}) \\ -(y_{hl} - y_{vr}) & (x_{hl} - x_{vr}) \end{bmatrix}^{-1} \cdot \begin{pmatrix} a_{z,vr} - a_{z,vl} \\ a_{z,hl} - a_{z,vl} \end{pmatrix}$$

$$(10).$$

Die Erfindung betrifft auch eine Steuereinrichtung für ein Fahrzeug, die dazu eingerichtet ist, ein Verfahren nach jeglichen der hierin geschilderten Aspekte auszuführen. Insbesondere kann die Steuereinrichtung dazu eingerichtet sein, Signale bzw. Werte der lokalen Dynamikgröße von Sensoren jeglicher hierin geschilderten Art zu erhalten und darauf basierend jegliche hierin geschilderten Schritte, Maßnahmen oder Funktionen auszuführen bzw. bereitzustellen. Insbesondere kann die Steuereinrichtung dazu eingerichtet sein, den Wert einer globalen Dynamikgröße des Fahrzeugs anhand der erhaltenen Sensorwerte zu ermitteln.

Allgemein kann die Steuereinrichtung ein einteiliges oder verteiltes Steuergerät sein. Sie kann wenigstens eine Prozessoreinrichtung aufweisen und/oder einen digitalen Speicher. Allgemein kann die Steuereinrichtung elektronisch und insbesondere digital betreibbar sein. Durch Ausführen von Programmanweisungen mit der Prozessoreinrichtung kann die Steuereinrichtung dazu eingerichtet sein, jegliche hierin geschilderten Schritte und Maßnahmen auszuführen.

Die Erfindung betrifft auch ein Fahrzeug mit den Merkmalen des Anspruchs 3.

Im Folgenden wird ein nicht erfindungsgemäßes Beispiel anhand der beigefügten schematischen Figuren erläutert.

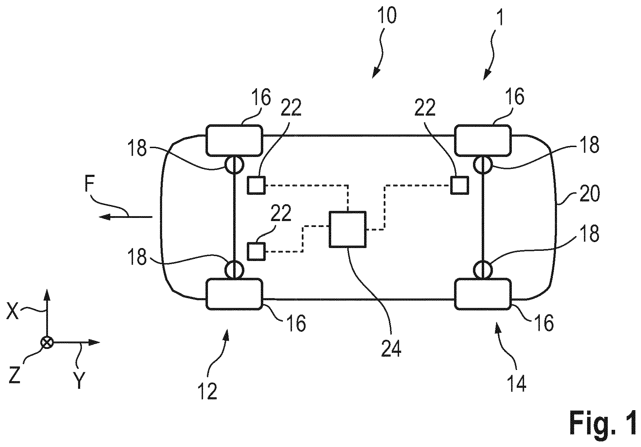

Fig. 1    zeigt eine schematische Draufsicht auf ein Fahrzeug, das eine Anordnung mit einer Steuereinrichtung gemäß einem nicht beanspruchten Beispiel umfasst, die ein nicht beanspruchtes Verfahren ausführt.

In Fig. 1 ist ein schematisches Fahrzeug 1 und genauer gesagt ein Kraftfahrzeug gezeigt, das eine nicht beanspruchte Anordnung 10 umfasst. Gezeigt ist auch eine Vorwärtsfahrrichtung F des Fahrzeugs 1 sowie eine Orientierung eines Fahrzeugkoordinatensystems. Definiert man dieses z.B. an einem Fahrzeugmittelpunkt, entspricht die Y-Achse der Wankachse und die X-Achse der Nickachse. Die Z-Achse entspricht einer vertikalen Raumrichtung bzw.

einer Höhenachse des Fahrzeugs 1. In bekannter Weise entsprechen Wank- und Nickbewegungen Bewegungen des Fahrzeugs 1 um die entsprechenden Achsen, also Rotationsbewegungen. Gezeigt sind auch eine Vorderachse 12 und eine Hinterachse 14, die jeweils zwei Fahrzeugräder 16 umfassen. Jedes Fahrzeugrad 16 ist über ein Feder-Dämpfer-System 18 am lediglich umrissen dargestellten Fahrzeugaufbau 20 gelagert bzw. stützt sich gegenüber diesem mittels des Feder-Dämpfer-Systems 18 ab. In an sich bekannter Weise erfolgt dies an einem nicht gesondert markierten jeweiligen Dompunkt innerhalb der Fahrzeugkarosserie des Aufbaus 20.

Dem Feder-Dämpfer-System 18 der beiden Vorderräder 16 und einem der Hinterräder (des rechten Hinterrads 16) ist jeweils ein Sensor 22 zugeordnet. Im gezeigten Beispiel handelt es sich hierbei um einen mehrteiligen Sensor 22, der sowohl eine Vertikalbeschleunigung als auch eine Höhe messen kann. Die Funktionsweise derartiger Sensoren insbesondere im Zusammenspiel mit Feder-Dämpfer-Systemen 18 ist prinzipiell bekannt.

Die Einbauorte der Sensoren 22 sind konstruktiv festgelegt, sodass deren Koordinatenwerte bekannt sind. Wie im allgemeinen Beschreibungsteil erläutert, ist es erfindungsgemäß nicht erforderlich (aber möglich), die Sensoren 22 der Vorderachse 12 auf einer gemeinsamen Höhe Z anzuordnen.

Die Sensoren 22 der Anordnung 10 sind jeweils mit einer Steuereinrichtung 24 dieser Anordnung 10 datenübertragend verbunden. Sie liefern als lokale Dynamikgrößen jeweils Messwerte bezüglich der Vertikalbeschleunigung und des Höhenstandes an die Steuereinrichtung 24. Diese ermittelt daraufhin unter Verwendung der vorstehend aufgezeigten Gleichungen und insbesondere unter Bestimmung einer Regressionsebene den Wankwinkel und Nickwinkel aus den ermittelten Höhenständen sowie die Wank- und Nickbeschleunigung aus den gemessenen Vertikalbeschleunigungen. Diese Größen, die mit einer aufwandsarmen kostengünstigen Sensorik zuverlässig bestimmt wurden, können dann weiteren bekannten Fahrerassistenzsystemen zugeführt werden.

**Bezugszeichenliste**

1    Fahrzeug
10    Anordnung
12    Vorderachse
14    Hinterachse
16    Fahrzeugrad
18    Feder-Dämpfer-System
20    Aufbau
22    Sensor
24    Steuereinrichtung
F    Vorwärtsfahrrichtung

**Patentansprüche**

1.    Verfahren zum Ermitteln von Dynamikgrößen eines Fahrzeugs (1),

wobei mehr als drei Sensoren (22) an unterschiedlichen Einbauorten im Fahrzeug (1) bereitgestellt sind, die jeweils einen Wert wenigstens einer lokalen Dynamikgröße des Fahrzeugs (1) ermitteln, die in Bezug auf eine vorbestimmte Fahrzeugachse (Z) definiert ist;
wobei die Einbauorte der mehr als drei Sensoren (22) nicht in einer gemeinsamen Ebene liegen;
wobei das Verfahren aufweist:

- Ermitteln eines Werts einer globalen Dynamikgröße des Fahrzeugs (1), die in Bezug auf eine Wank- oder Nickachse (X, Y) des Fahrzeugs (1) definiert ist, anhand der Werte der lokalen Dynamikgröße sowie unter Berücksichtigung wenigstens zweier Koordinatenwerte eines jeden Einbauorts,

wobei

die globale Dynamikgröße ein Nickwinkel oder ein Wankwinkel ist und dass die lokale Dynamikgröße ein Höhenstand von zumindest einem Teil des Fahrzeugs entlang einer Vertikalachse (Z) des Fahrzeugs (1) ist, wobei eine Regressionsebene auf Basis von dem jeweiligen Wert der jeweiligen lokalen Dynamikgröße der mehr als drei Sensoren (22) durch Minimierung einer Abstandsgröße der Regressionsebene zu dem jeweiligen Wert der jeweiligen lokalen Dynamikgröße der mehr als drei Sensoren (22) ermittelt wird und anhand der räumlichen Lage dieser Regressionsebene die globale Dynamikgröße bestimmt wird.

**2.** Verfahren nach Anspruch 1,
**dadurch gekennzeichnet, dass** zwei der Sensoren (22) einer gemeinsamen Fahrzeugradachse (12, 14) zugeordnet sind und sich die Einbauorte dieser Sensoren (22) hinsichtlich des Betrags wenigstens eines Einbauort-Koordinatenwerts voneinander unterscheiden.

**3.** Fahrzeug aufweisend eine Anordnung (10) mit mehr als drei Sensoren (22), die an unterschiedlichen Einbauorten im Fahrzeug (1) anordenbar sind und die jeweils dazu eingerichtet sind, einen Wert wenigstens einer lokalen Dynamikgröße des Fahrzeugs (1) zu ermitteln, die in Bezug auf eine vorbestimmte Fahrzeugachse definiert ist;
wobei die Einbauorte der mehr als drei Sensoren (22) nicht in einer gemeinsamen Ebene liegen;

- einer Steuereinrichtung (24), wobei die Steuereinrichtung (24) dazu eingerichtet ist, ein Verfahren nach jeglichem der vorangehenden Ansprüche 1 oder 2 auszuführen.

**Claims**

**1.** Method for determining dynamic variables of a vehicle (1),

wherein more than three sensors (22) are provided at different installation locations in the vehicle (1), each of which determines a value of at least one local dynamic variable of the vehicle (1), which variable is defined with respect to a predetermined vehicle axis (Z);
wherein the installation locations of the more than three sensors (22) are not located in a common plane;
wherein the method comprises:

- determining, on the basis of the values of the local dynamic variable and taking into account at least two coordinate values of each installation location, a value of a global dynamic variable of the vehicle (1), which variable is defined with respect to a roll or pitch axis (X, Y) of the vehicle (1),

wherein
the global dynamic variable is a pitch angle or a roll angle and that the local dynamic variable is a height of at least part of the vehicle along a vertical axis (Z) of the vehicle (1),
wherein a regression plane is determined on the basis of the respective values of the respective local dynamic variables of the more than three sensors (22) by minimizing a distance variable of the regression plane in relation to the respective values of the respective local dynamic variables of the more than three sensors (22) and the global dynamic variable is determined on the basis of the spatial position of this regression plane.

**2.** Method according to claim 1,
**characterized in that** two of the sensors (22) are assigned to a common vehicle wheel axle (12, 14) and the installation locations of these sensors (22) differ from one another with regard to the magnitude of at least one installation location coordinate value.

**3.** Vehicle comprising an arrangement (10) which has:

more than three sensors (22) which can be arranged at different installation locations in the vehicle (1) and each of which is designed to determine a value of at least one local dynamic variable of the vehicle (1), which variable is defined with respect to a predetermined vehicle axis;
wherein the installation locations of the more than three sensors (22) are not located in a common plane;

- a control device (24), wherein the control device (24) is designed to carry out a method according to any one of the preceding claims 1 and 2.

**Revendications**

**1.** Procédé pour la détermination de grandeurs dynamiques d'un véhicule (1),

dans lequel plus de trois capteurs (22) sont prévus à différents emplacements de montage dans le véhicule (1), lesquels capteurs déterminent respectivement une valeur d'au moins une grandeur dynamique locale du véhicule (1), laquelle grandeur dynamique est définie par rapport à un axe de véhicule (Z) estimé au préalable ; dans lequel les emplacements de montage des plus de trois capteurs (22) ne sont pas situés dans un plan commun ;

dans lequel le procédé présente :

- la détermination d'une valeur d'une grandeur dynamique globale du véhicule (1), laquelle est définie par rapport à un axe de roulis ou de tangage (X, Y) du véhicule (1), à l'aide des valeurs de la grandeur dynamique locale ainsi qu'en prenant en compte au moins deux valeurs de coordonnées de chaque emplacement de montage, dans lequel

la grandeur dynamique globale est un angle de tangage ou un angle de roulis et que la grandeur dynamique locale est une hauteur d'au moins une partie du véhicule le long d'un axe vertical (Z) du véhicule (1), dans lequel un plan de régression est déterminé sur la base de la valeur respective de la grandeur dynamique locale respective des plus de trois capteurs (22) en minimisant une grandeur de distance du plan de régression par rapport à la valeur respective de la grandeur dynamique locale respective des plus de trois capteurs (22), et la grandeur dynamique globale est estimée à l'aide de la position spatiale dudit plan de régression.

2.  Procédé selon la revendication 1,
    **caractérisé en ce que** deux des capteurs (22) sont associés à un axe de roue de véhicule (12, 14) commun et les emplacements de montage desdits capteurs (22) se distinguent les uns des autres en ce qui concerne le montant d'au moins une valeur de coordonnée d'emplacement de montage.

3.  Véhicule présentant un système (10) comportant :

    plus de trois capteurs (22) pouvant être disposés à différents emplacements de montage dans le véhicule (1) et étant respectivement configurés pour déterminer une valeur d'au moins une grandeur dynamique locale du véhicule (1) définie par rapport à un axe de véhicule estimé au préalable ;
    dans lequel les emplacements de montage des plus de trois capteurs (22) ne sont pas situés dans un plan commun ;

    - un dispositif de commande (24), dans lequel le dispositif de commande (24) est configuré pour mettre en œuvre un procédé selon l'une quelconque des revendications précédentes 1 ou 2.

Fig. 1

**EP 4 107 016 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10361281 A1
- DE 102004024951
- DE 102006001436 A1
- DE 4117540 A1
- DE 102010003205 A1
- DE 102007051204 B4